# EUROPÄISCHE PATENTANMELDUNG

(11) **EP 2 944 732 A1**
(43) Veröffentlichungstag der Anmeldung: **18.11.2015**
(21) Anmeldenummer: 14194768.9
(22) Anmeldetag: 25.11.2014
(51) Int. Cl.: E04B 1/94, B32B 9/00, C04B 26/32, C04B 28/00, C04B 28/02, C04B 28/10, C04B 28/14, C04B 28/26

(54) **BRANDSCHUTZPLATTE**

(30) Priorität: 16.05.2014 DE 102014106963
(71) Anmelder: Genius Patentverwertung GmbH & Co. KG, 15711 Königs Wusterhausen (DE)
(72) Erfinder: Pasewald, Klaus-Michael, 15827 Blankenfelde (DE)
(74) Vertreter: Moser Götze & Partner Patentanwälte mbB

(57) **Zusammenfassung**

Brandschutzplatte aus Plattenmaterial auf Basis eines Brandschutzmittels aus lediglich inertem, nicht-leitfähigem und nicht brennbarem sowie saugfähigem Hohlglasgranulat und einem härtbaren nicht-brennbaren Bindemittel.

## Beschreibung

Die Erfindung betrifft eine Brandschutzplatte gemäß Anspruch 1.

Löschmittel, also Mittel, die zum Löschen von Bränden geeignet sind, sind bekannt. Sie haben die Aufgabe brennende Stoffe unter Berücksichtigung der jeweiligen Brandklasse und vorherrschenden Bedingungen zu löschen. Sie kommen zum Einsatz, wenn der Brand bereits ausgebrochen ist.

Man unterscheidet die Löschmittel nach ihrer Wirkungsweise. So wirken Löschmittel im Wesentlichen durch Ersticken, Abkühlen oder Inhibition.

Das wohl bekannteste Löschmittel Wasser wird bevorzugt zur Bekämpfung von Bränden der Brandklasse A (glutbildende Stoffe) eingesetzt. Des Weiteren kennt man Löschschaum und wässrige Lösungen. Löschschaum ist eine hochwirksame Mischung aus Wasser, Schaummittel und Luft. Dem fließenden Wasserstrom wird über Zumischgeräte eine prozentual gleich bleibende Menge Schaummittel zugeführt. Das so entstehende Gemisch wird in nachgeschalteten Schaumerzeugern mit Luft verschäumt. Der Luftschaum nutzt unterschiedliche Löscheffekte: Kühlen, Ersticken, Trennen, Abdecken, Dämmen und Verdrängen - jeder für sich oder im Zusammenwirken mit anderen sorgen sie für einen schnellen Löscherfolg.

Als Löschmittel sind auch Inertgase bekannt. Die Löschwirkung von solchen Gasen, wie z. B. Argon, Stickstoff und Kohlendioxid wird durch die Verdrängung des Luftsauerstoffes erreicht. Man spricht hier vom Stickeffekt, der bei Unterschreitung des für die Verbrennung erforderlichen spezifischen Grenzwertes eintritt. In den meisten Fällen erlischt das Feuer schon bei einer Sauerstoffabsenkung auf 13,8 Vol.-%. Dazu muss das vorhandene Luftvolumen nur um etwa 1/3 verdrängt werden, was einer Löschgaskonzentration von 34 Vol.-% entspricht. Allerdings spielt hier die Personengefährdung eine wichtige Rolle.

Als Löschmittel sind neben diesen Inertgasen auch Halone bekannt, die im Wesentlichen dadurch wirken, dass sie in der Flamme in Radikale zerfallen, die als Radikalfänger in die Kettenreaktion der Verbrennung eingreifen und so den Brand zum Erliegen bringen. Sie weisen also einen Inhibitionseffekt auf. Auch diese sind für den Menschen giftig.

Als übliches Löschmittel sind ferner Löschpulver bekannt, die hochwirksame und schnelle Löschmittel darstellen. Die schlagartige Löschwirkung der Pulverwolke resultiert aus dem Stickeffekt und Inhibitionseffekt. Durch die Bildung von Schmelz-schichten auf glutbildenden Brandstoffen wird die Diffusion von Luftsauerstoff in den Brandherd und die Aufheizung der unmittelbaren Brandumgebung verhindert. Rückzündungen werden unterbunden. Löschpulver bestehen im Wesentlichen aus ungiftigen, anorganischen Salzen, die mit Hydrophorbierungs- und Rieselhilfsmitteln versetzt sind.

Diese üblichen Löschmittel weisen neben der inhärenten Problematik, dass es bereits zu einem Brand gekommen ist, im Wesentlichen zwei Hauptnachteile auf, nämlich eine fehlende Wiederverwendbarkeit einerseits und eine Gefährdung der Umwelt und/oder der Gesundheit von Personen anderseits. Zudem kommt die Beschränkung der Anwendung auf bestimmte Brandklassen.

Von dem nachträglichen Einsatz von Löschmitteln zu unterscheiden ist der (vorbeugende) Brandschutz mit Brandschutzmitteln, unter dem man alle Maßnahmen, die der Entstehung eines Brandes und der Ausbreitung von Feuer und Rauch (Brandausbreitung) vorbeugen, versteht.

Vorbeugender Brandschutz ist dabei der Überbegriff für alle Maßnahmen, die im Gegensatz zu Löschmitteln im Voraus die Entstehung, Ausbreitung und Auswirkung von Bränden verhindern, beziehungsweise stark einschränken. Meist wird Brandschutz in Gebäuden betrieben. Er beschränkt sich jedoch keinesfalls auf sie.

Die baulichen Maßnahmen beispielsweise in Gebäuden sind sehr vielfältig und erstrecken sich von den verwendeten Baustoffen und Bauteilen, geregelt in DIN 4102 und ENV 1992-1-2, über den baulichen Brandschutz in Industriebauten, geregelt in der DIN 18230, über die Fluchtwegplanung hin zu Löschanlagen in Gebäuden.

So offenbaren die DE 197 25 761 A1, die DE 196 00 977 A1 und DE 296 00 466 U1 die Verwendung von Hohlglaskugeln als wärme- und schallisolierende Zusätze in Brandschutzbeschichtungen und als Gerüststoffe zur Verbesserung der pastösen Eigenschaften von Schaummassen im vorbeugenden baulichen Brandschutz.

Die DE 43 16 189 A1 offenbart die Verwendung von Hohlglaskugeln als Verstärkungsmittel in thermoplastischen flammengeschützten Formmassen.

Die DE 102 39 631 A1 offenbart Isolierbauteile zur Wärme- und/oder Schallisolierung mit einer feuerhemmenden Beschichtung, die zur Reduzierung des Gewichts und Verbesserung der Isolierwirkung keramische Mikrohohlkugeln aufweisen.

Aus der DE 690 03 994 T2 ist ein pulverförmiges Löschmittel bekannt, dass eine Mischung von 95 bis 70 Gew.-% eines Boroxidpulvers mit einem Partikeldurchmesser im Bereich von 5 bis 1000 µm und 5 bis 30 Gew.-% eines anorganischen Pulvers aus Partikeln mit einer im Wesentlichen sphärischen Partikelform enthält, die entweder als Glasperlen mit einem Partikeldurchmesser im Bereich von 5 bis 200 µm oder als hohle Mikrokugeln im Bereich von 50 bis 600 µm ausgebildet sind.

In der DE 38 30 122 A1 ist ein Brandbekämpfungsmaterial erwähnt, das ganz oder hauptsächlich aus Glaspartikeln besteht, wobei die Glaspartikel Partikel aus zerkleinertem Glasmaterial sind, das einen hydrophoben Überzug trägt.

Aus der DE 43 43 196 A1 sind Hohlperlen aus Bor enthaltenen Aluminiumphosphaten bekannt. Diese können als Verpackungsmaterial, zum Abdecken von Flüssigkeiten, als Zusatz zu Lacken, Beschichtungen, Mörteln, Beton und Gips, als Füllstoff für flüssige und feste Kunstharze, Elastomere und Kunststoffe, zur Herstellung von blättchenförmigen Pigmenten, als Elektroisoliermaterial, als Zusatz zu Spachtelmassen, keramischen Schlicken, Ziegelmasse, Estrichen, Kitten, Keramik, Glasmassen und metallischen und nichtmetallischen Sintermassen, als Ausgangsmaterialien zur Herstellung von Leicht-Formteilen und als Teil von Bau- und Konstruktionselementen mit isolierenden und schallabsorbierenden Eigenschaften, sowie gegebenenfalls auch als Isoliermaterial und für einen Brandschutz verwendet wird.

Aus der WO 2004/026788 A1 ist ein Isolierbauteil zur Wärme- und/oder Schallisolierung bekannt, dass zumindest partiell mit einer feuerhemmenden Beschichtung versehen ist, wobei die Beschichtung sich mindestens aus den folgenden Komponenten zusammen setzt:
40 bis 90 Gew.-% eines keramischen Klebstoffes
5 bis 50 Gew.-% keramischer Mikrohohlkugeln mit einer Korngröße im Bereich von 0,1 bis 3 mm sowie
0,1 bis 10 Gew.-% eines unter Wärmeeinwirkung expandierendes Treibmittel.

Aus der WO 2007/125070 A2 ist ein Löschmittel enthaltend temperaturfestes, hohles Rundgranulat und ein System zum Löschen von Bränden im Gefahrenobjekt unter dessen Verwendung sowie ein Verfahren zum Löschen von Bränden bekannt, wobei auf den Brand ein entsprechendes Löschmittel aufgebracht wird.

Aus der DE 10 2006 019 739 B4 ist ein System zum Löschen von Bränden in einem Gefahrenobjekt unter Verwendung eines Löschmittels mit mindestens einem Vorratsbehälter für das Löschmittel, mit einem Rohrleitungssystem zum Transport des Löschmittels vom Vorratsbehälter zum Brand und mit einem Fördermittel zum Fördern des Löschmittels vom Vorratsbehälter durch das Rohrleitungssystem zum Brand bekannt. Als Löschmittel kommt ein bis wenigstens 1000 Grad temperaturfestes, hohles Rundgranulat zum Einsatz, dessen Durchmesser zwischen 0,1 mm und 5 mm liegt. Dieses System hat sich bereits bewährt, benötigt aber aktive Fördermittel, Sensoren etc. und kommt somit eher für Industrieanlagen in Frage.

Aus der EP 2 167 439 B1 ist eine Verwendung eines Brandschutzmittels bestehend aus einem bis wenigstens 1000°C temperaturfesten hohlen Rundgranulat aus Hohlglaskugeln, wobei der Durchmesser des Rundgranulats zwischen 0,1 mm und 5 mm liegt, zum vorbeugenden Brandschutz durch dauerhaftes Aufbringen auf das Gefahrenobjekt und/oder dauerhaftes Verfüllen des Gefahrenobjekts mit dem Brandschutzmittel bekannt. Auch diese Idee hat sich bewährt, eignet sich aber insbesondere für die schwimmende Aufbringung in Tanklagern oder Verfüllen von Kabelkanälen etc.

Die DE 10 2008 026 650 A1 beschreibt eine schalladsorbierende Platte mit einem Kernkörper, der als Hauptbestandteil ein körniges Füllmaterial umfasst, welches mit einem alkalischen mineralischen Bindemittel gebunden ist und 10 - 20 Gew.-% Grafit bezogen auf die nasse Ausgangsmischung enthält.

Die DE 43 39 175 A1 beschreibt ein Verfahren zur Herstellung von Formteilen und Bauelementen aus einer Mischung granulatförmiger Leichtbaustoffe und Alkaliwasserglas durch Pressformen bei erhöhter Temperatur.

Demgegenüber hat die vorliegende Erfindung die Aufgabe, eine Brandschutzplatte bereitzustellen, die vielseitig einsetzbar ist. Zudem sollte sie möglichst einfach und günstig herstellbar sowie umweltfreundlich sein. Auch sollte das Brandschutzplattenmaterial wenig oder gar nicht gesundheits- oder umweltgefährdend sein.

Diese Aufgabe wird durch die in Anspruch 1 wiedergegebene Brandschutzplatte gelöst.

Erfindungsgemäß ist erkannt worden, dass wenn die Brandschutzplatte aus Plattenmaterial auf Basis eines Brandschutzmittels aus lediglich inertem, nicht-leitfähigem und nicht brennbarem sowie saugfähigem Hohlglasgranulat und einem härtbaren nicht-brennbarem Bindemittel besteht, es möglich ist, stabile Brandschutzplatten bereitzustellen, die hoch feuerfest sind.

Das bevorzugte Brandschutzmittel besteht lediglich aus Hohlglasgranulat, d.h. es enthält nur Hohlglasgranulat (auch Blähglasgranulat genannt) und sonst keine weiteren Bestandteile. Vorzugsweise ist das Hohlglasgranulat ein bis wenigstens 800 °C oder sogar 1000°C temperaturfestes hohles oder mit Hohlstellen versehenes Rundgranulat, das vorzugsweise einen mittleren Durchmesser zwischen 0,1 mm und 10 mm aufweist. Noch bevorzugter ist ein mittlerer Durchmesser zwischen 0,1 mm und 5 mm.

Somit sind auch die Brandschutzplatten bei Temperaturen von mehr als ca. 800°C einsetzbar bzw. stabil.

Zur Verbesserung der Optik der Brandschutzplatten und der mechanischen Stabilität ist es sinnvoll, wenn mindestens einseitig, vorzugsweise beidseitig ein feuerfestes Vlies und ein feuerfestes Gittergewebe angeordnet sind. Mit anderen Worten, es wird auf dem Kern der Platte aus Hohlglasgranulat und Bindemittel zunächst ein Gittergewebe und darauf ein Vlies angeordnet. Es entsteht eine mehrschichtige Platte.

Vorzugsweise ist das Vlies ein Glasfaservlies und das Gittergewebe ein Glasgittergewebe.

Als härtbare, nicht-brennbare Bindemittel kommen in Betracht:
- Wasserglas mit und ohne Härter/Beschleuniger
- Kalk (z.B. Gebrannter Kalk, insbesondere Fettkalk), Zement
- Gips; (z.B. Halbhydrate, Anhydrit)
- Tone
- Reaktive keramische Pulver
- Reaktive und rekristallisationsfähige Gläser
- Glasuren
- Silane

Als keramische Pulver kommen insbesondere silikatische Rohstoffe, (wie z.B. Tonminerale und deren Gemische, Kaoline, Quarz, Feldspäte) und oxidische Rohstoffe (wie z.B. Aluminiumoxid, Zirkonoxid) in Frage.

Es hat sich auch herausgestellt, dass als Bindemittel ein Wasserglas-Bindemittel, insbesondere umfassend Natriumwasserglas und/oder Kaliumwasserglas besonders geeignet ist. Es kann ohne Zusatz oder mit einem zusätzlichen Additiv wie Aluminiumphosphat oder Aluminiumhydroxid verwendet werden.

Selbstverständlich können Mischungen der zuvor genannten Bindemittel eingesetzt werden.

Vorzugsweise enthalten die Brandschutzplatten 15 - 50 Gew.-% Bindemittel. Besonders bevorzugt sind ca. 16 bis 20 % jeweils bezogen auf nasse Ausgangsmischung.

Eine besonders bevorzugte Ausführungsform der Brandschutzplatten besitzt eine Enddichte im Bereich von ca. 320 bis 360, insbesondere 340 kg/m³ nach dem Trocknen.

Die erfindungsgemäßen Brandschutzplatten eignen sich hervorragend für den Innenausbau im Trockenbauverfahren und auch zur feuerfesten Verkleidung von Räumen und Behältern.

Zur Erhöhung der Feuerfestigkeit, wie z.B. von F60 auf F90 usw., können die Brandschutzplatten miteinander verklebt werden, um Doppelplatten, Dreifachplatten usw. herzustellen. Eine Doppelplatte besteht demnach aus zwei verklebten Einzelplatten.

Als Kleber hat sich ein Kleber enthaltend Wasserglas, Aluminiumtrihydrat und Kaolin bewährt.

Weitere Merkmale und Einzelheiten der Erfindung ergeben sich aus der nachfolgenden Beschreibung der Zeichnung. Es zeigen:
Fig. 1 eine schematische Schnittansicht durch eine erfindungsgemäße Brandschutzplatte und
Fig. 2 eine schematische Schnittansicht durch eine erfindungsgemäße Brandschutzplatte in Doppelplattenausführung.

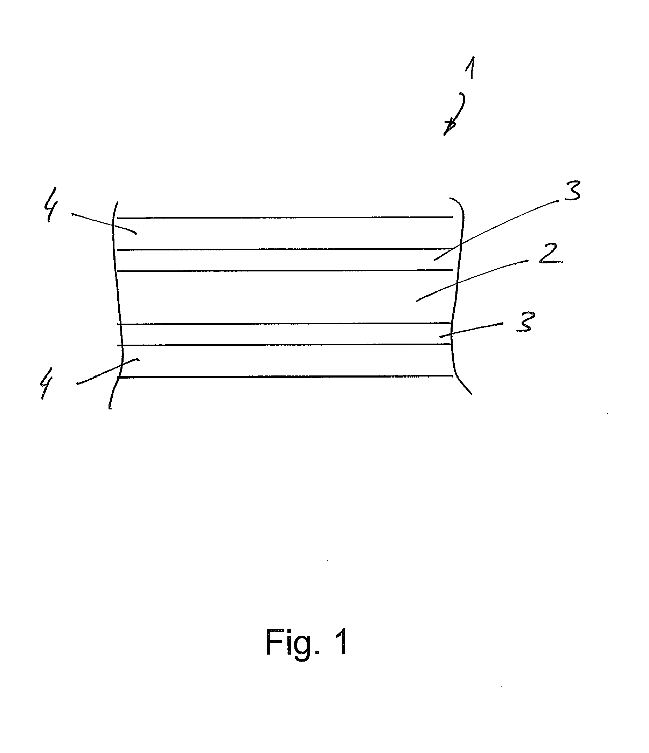

In der Figur 1 ist eine als Ganzes mit 1 bezeichnete Brandschutzplatte schematisch im Schnitt dargestellt.

Die Platte 1 weist einen Kern 2 aus Hohlglasgranulat und Wasserglas als Bindemittel auf.

Das Hohlglasgranulat als Brandschutzmittel ist inert, nicht-leitfähig und nicht brennbar sowie saugfähig und schmilzt erst oberhalb von mindestens 1000 °C. Es weist einen mittleren Durchmesser zwischen 0,1 und 5 mm (nach Siebanalyse) auf.

Das Wasserglas ist Natriumwasserglas und Kaliumwasserglas im 1:1 Gemisch und seine Menge beträgt 20 Gew.-% bezogen auf nasse Ausgangsmischung.

Auf beiden Seiten des Kerns 2 sind zunächst ein Glasgittergewebe 3 und darauf ein Glasfaservlies 4 angeordnet.

Die Brandschutzplatte 1 hat etwa eine Dichte von 340 kg/m³.
Diese Einzelplatten weisen eine Dicke von etwa 12 mm auf.

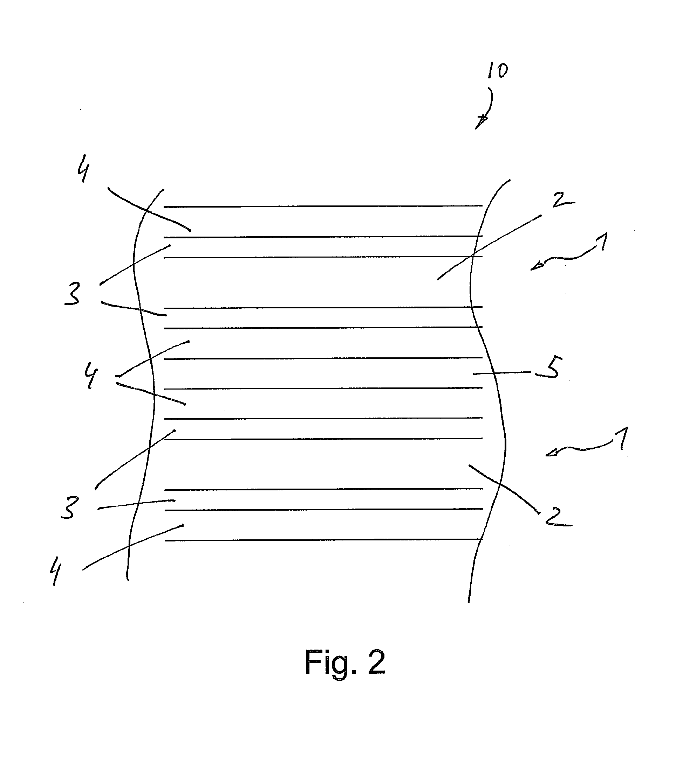

In der Figur 2 ist eine als Ganzes mit 10 bezeichnete Doppel-Brandschutzplatte schematisch im Schnitt dargestellt.

Sie besteht aus zwei Einzelbrandschutzplatten (vgl. Figur 1), die miteinander verklebt wurden.

Der Kleber 5 besteht aus Natriumwasserglas, Kaliumwasserglas, Aluminiumtrihydrat und Kaolin. Die Klebeschicht weist eine Stärke von etwa 1 mm auf, so dass die Doppelplatte 10 etwa ein Dicke von 25 mm aufweist.

### Bezugszeichenliste

- 1, 10: Brandschutzplatte
- 2: Kern
- 3: Glasgittergewebe
- 4: Glasfaservlies
- 5: Kleber

## Patentansprüche

1. Brandschutzplatte aus Plattenmaterial auf Basis eines Brandschutzmittels aus lediglich inertem, nicht-leitfähigem und nicht brennbarem sowie saugfähigem Hohlglasgranulat und einem härtbaren nicht-brennbaren Bindemittel.

2. Brandschutzplatte nach Anspruch 1, **dadurch gekennzeichnet, dass** mindestens einseitig, vorzugsweise beidseitig ein feuerfestes Vlies und ein feuerfestes Gittergewebe angeordnet sind.

3. Brandschutzplatte nach Anspruch 2, **dadurch gekennzeichnet, dass** das Vlies ein Glasfaservlies ist.

4. Brandschutzplatte nach Anspruch 2 oder 3, **dadurch gekennzeichnet, dass** das Gittergewebe ein Glasgittergewebe ist.

5. Brandschutzplatte nach einem der vorhergehenden Ansprüche, **dadurch gekennzeichnet, dass** das Bindemittel ausgewählt ist aus der Gruppe umfassend Wasserglas mit und ohne Härter/Beschleuniger, Kalk, Zement, Gips; (z.B. Halbhydrate, Anhydrit), Tone, reaktive keramische Pulver, reaktive und rekristallisationsfähige Gläser, Glasuren, Silane oder Mischungen der zuvor genannten.

6. Brandschutzplatte nach einem der vorhergehenden Ansprüche, **dadurch gekennzeichnet, dass** das Hohlglasgranulat ein bis wenigstens 800°C temperaturfestes hohles oder mit Hohlstellen versehenes Rundgranulat ist, das vorzugsweise einen mittleren Durchmesser zwischen 0,1 mm und 10 mm aufweist.

7. Brandschutzplatte nach einem der vorhergehenden Ansprüche, **dadurch gekennzeichnet, dass** es sich um Mehrfachplatten aus mindestens zwei verklebten Einzelplatten handelt.

8. Brandschutzplatte nach Anspruch 7, **dadurch gekennzeichnet, dass** die Einzelplatten mittels Kleber enthaltend Wasserglas, Aluminiumtrihydrat und Kaolin verklebt sind.
